# EUROPEAN PATENT APPLICATION

(11) **EP 2 346 226 A1**
(43) Date of publication of application: **20.07.2011**
(21) Application number: 09823022.0
(22) Date of filing: 13.08.2009
(51) Int. Cl.: H04L 29/08

(54) **METHOD, SYSTEM AND DEVICE FOR CONTENT DELIVERY AND MEDIA SERVER**

(30) Priority: 27.10.2008 CN 200810218655
(71) Applicant: Huawei Technologies Co., Ltd., Shenzhen, Guangdong 518129 (CN)
(72) Inventor: GAN, Mo, Shenzhen Guangdong 518129 (CN)
(74) Representative: Pfenning, Meinig & Partner GbR
(86) International application number: PCT/CN2009/073236
(87) International publication number: WO 2010/048830

(57) **Abstract**

A content distribution network (CDN) system is disclosed, where the system includes a content distribution device and at least one media server. Storage media with different characteristics are mounted on the media server or storage media with different characteristics are mounted on media servers. The content distribution device is configured to select a storage medium for content according to a mapping relationship between the attributes of the content and the characteristics of the storage medium, and distribute the content to the storage medium through the media server on which the storage medium is mounted. A content distribution method and a content distribution device are also provided. Because the content of different types is distributed to storage media with different characteristics, the cost of the storage medium in the CDN system is reduced, and the storage utilization ratio is increased.

## Description

This application claims priority to Chinese Patent Application No. 200810218655.0, filed with the Chinese Patent Office on October 27, 2008 and entitled "CONTENT DISTRIBUTION METHOD, SYSTEM, DEVICE AND MEDIA SERVER", which is incorporated herein by reference in its entirety.

### FIELD OF THE INVENTION

The present invention relates to the field of network communication technologies, and in particular, to a content distribution method, system, device and media server.

### BACKGROUND OF THE INVENTION

A content distribution network (CDN) adds a new network architecture to an existing Internet Protocol (IP) network, and publishes content to a network edge closest to users, so that the users may obtain desired content at a nearby place. The CDN (hereinafter referred to as the CDN system) is widely applied in fields such as personal computer (PC) streaming media, IP television (IPTV), mobile streaming media, and video monitoring. In terms of technology, it completely solves the problem of unsatisfactory user experience in the access of streaming media content due to low network bandwidth, heavy user access traffic, and uneven distribution of user locations. Media servers are deployed at the network edge in the CDN system to cache media content and serve users more closely. These media servers are divided into different media server groups according to the user location. Each media server group belongs to the same CDN node, and serves user groups close to it. In a large CDN system, the content capacity required is large, and there are a lot of users to be served. Therefore, extremely high requirements are imposed on the media servers in the CDN system. In addition, the storage media mounted on the media servers are required to store sufficient media content.

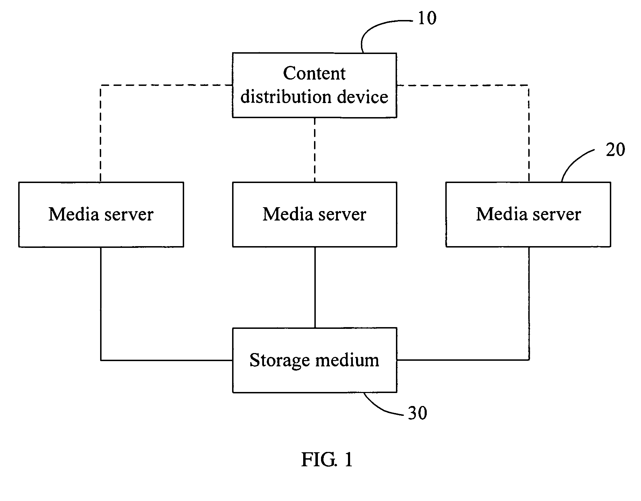

FIG. 1 is a schematic diagram of a structure of a CDN system according to a first technical solution in the prior art. As shown in FIG 1, the content distribution device 10 in the CDN system controls the content distribution on the media servers on the entire network, including obtaining content from a content source and copying content between media servers 20. During the content distribution, content of various service types is uniformly delivered to the same type of storage medium 30. With respect to on-demand content, after the on-demand content is delivered to the storage medium 30, the media server 20 waits for the user request; when the user initiates an on-demand request to the media server 20, the media server 20 obtains the on-demand content from the storage medium 30, and sends the streaming content to the terminal after streaming. With respect to live broadcast content, when a live broadcast description file is delivered to the storage medium 30, the media server obtains a live broadcast stream from a corresponding unicast or multicast address according to the information in the live broadcast description file. The live broadcast stream is generally sent by the encoder to the media server 20 through a network device. When it is necessary to implement TV on demand (TVoD), time-shifted TV, and TV playback services, the media server 20 needs to record the live broadcast stream in the storage medium 30 after receiving a live broadcast stream, and the storage medium 30 mounted on the media server 20 should have high write performance.

A second technical solution in the prior art introduces a fragmentation technology for the media server. To implement load sharing between the media servers on a non-shared storage medium, the media servers fragment the content before caching the content in the storage medium, and then stores the fragments of the media content in the storage media on different media servers. In this way, the loads of the media servers are more balanced, but a fragment allocation device needs to be added. In a playing process, the fragment allocation device is needed to perform fragment management and instruct different media servers to send the content fragments stored in the storage medium to the terminals. The content mentioned hereinafter includes content fragments.

During the implementation of the present invention, the inventor discovers at least the following problems in the prior art:

The CDN system has a large storage requirement and the cost of the storage medium required is high. If the on-demand content and TVoD content are stored on the same type of storage media, content in different scenarios and with different popularities is stored on storage media of a fixed type and with fixed storage configurations. Consequently, the read and write performance of different storage media cannot be effectively used, nor is the read and write performance of the storage media under different configurations, thus wasting storage resources. Although the fragmentation of the media content can implement load sharing between the media servers and between storage media, the content is stored on the same type of storage media or storage media with the same configurations, resulting in a low storage utilization ratio and a waste of storage resources.

### SUMMARY OF THE INVENTION

Embodiments of the present invention provide a content distribution method and system, so that different types of storage media and storage media with different configurations in a CDN system may be used to store content or content fragments with different attributes. In this way, the costs of storage media in the CDN system are reduced, and the storage utilization ratio is increased.

An embodiment of the present invention provides a content distribution method, including:
selecting a storage medium for content according to a mapping relationship between attributes of the content and characteristics of a storage medium; and
delivering the content to the selected storage medium through a media server where the selected storage medium is mounted.

An embodiment of the present invention provides a CDN system, including a content distribution device and at least one media server, where:
storage media with different characteristics are mounted on the at least one media server, or storage media with different characteristics are mounted on the media servers; and
the content distribution device is configured to: select a storage medium for content according to a mapping relationship between attributes of the content and characteristics of the storage medium, and deliver the content to the selected storage medium through the media server on which the selected storage medium is mounted.

A content distribution device includes:
a first distribution policy unit, configured to: select a storage medium for content according to a mapping relationship between attributes of the content and characteristics of the storage medium, and determine a media server on which the selected storage medium is mounted; and
an instructing unit, configured to instruct the media server on which the selected storage medium is mounted to perform content distribution.

A media server includes:
a second distribution policy unit, configured to select, according to a mapping relationship between changed attributes of the content and characteristics of the storage medium, another storage medium mounted on the media server for content, when the attributes of the content in the storage medium mounted on the media server are changed; and
an adjusting unit, configured to move the content from a current storage medium to a newly selected storage medium.

In embodiments of the present invention, storage media of different storage types and/or with different performances are introduced in the CDN system; the content is delivered to a proper storage medium according to the attributes of the media content. In this way, storage media with different characteristics may be used reasonably and effectively, thus increasing the storage utilization ratio of the storage medium and reducing the cost of the CDN system.

### BRIEF DESCRIPTION OF THE DRAWINGS

FIG. 1 is a schematic diagram of a structure of a CDN system according to a first technical solution in the prior art;
FIG 2 is a schematic diagram of a structure of a CDN system according to an embodiment of the present invention;
FIG. 3 is a schematic diagram of a structure of the content distribution device shown in FIG 2;
FIG. 4 is a schematic diagram of a structure of a CDN system according to another embodiment of the present invention;
FIG 5 is a schematic diagram of a structure of a CDN system according to still another embodiment of the present invention;
FIG. 6 is a schematic diagram of a flowchart of a content distribution method according to an embodiment of the present invention;
FIG. 7 is an example of implementing content distribution according to an embodiment of the present invention; and
FIG. 8 is an example of dynamically adjusting content in different storage media on the same media server according to an embodiment of the present invention.

### DETAILED DESCRIPTION OF THE EMBODIMENTS

The present invention is hereinafter described in detail with reference to the accompanying drawings.

In embodiments of the present invention, content with different popularities and of different service types is delivered to different types of storage media or the same type of storage media with different configurations to match different read and write requirements of different content. It should be noted that the content described in embodiments of the present invention includes content fragments.

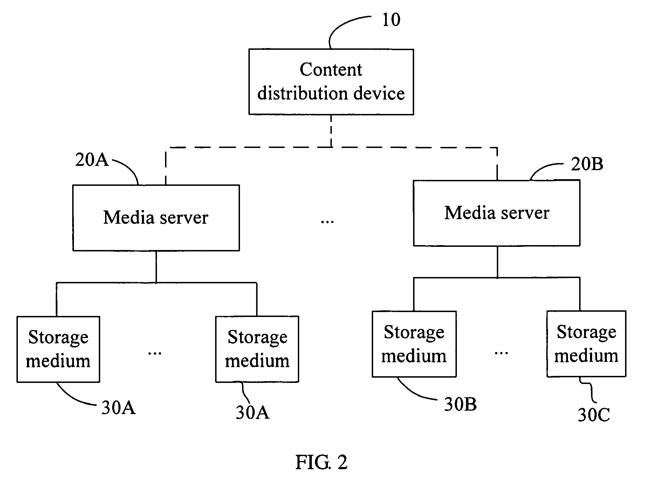

FIG 2 is a schematic diagram of a structure of a CDN system according to an embodiment of the present invention. As shown in FIG. 2, the CDN system includes a content distribution device 10 and at least one media server 20 (including a media server 20A and a media server 2B in FIG. 2). Storage media (storage medium 30A in FIG. 2) with the same characteristics are mounted on the media server 20A, and storage media (storage medium 30B and storage medium 30C in FIG. 2) with different characteristics are mounted on the media server 20B.

The content distribution device 10 is configured to: select a storage medium for content according to the mapping relationship between attributes of the content and characteristics of the storage medium, and distribute the content to the storage medium through the media server on which the storage medium is mounted.

In this embodiment, the content distribution device 10 obtains the characteristics of all the storage media in the CDN system according to the characteristics of the storage medium 30A mounted on the media server 20A and the characteristics of the storage media 30B and 30C mounted on the media server 20B.

Optionally, in this embodiment, the characteristics of the storage media mounted on all the media servers may be pre-configured in the CDN system, so that the content distribution device 10 can obtain these characteristics.

It should be noted that, the attributes of the content in this embodiment include the service type and popularity of the content. The service type includes on-demand content and TVoD content. The TVoD content is a feature service supported by the bidirectional transmission capability of the IP network. This service allows a user to watch played program content within a certain period of time, including TVoD, time-shifted TV, and TV playback. The popularity of the content is determined by the content access frequency of users within a certain period of time. The content with a high popularity is hot content, with a high user access frequency within a certain period of time. The content with a low popularity is non-hot content, with a low user access frequency within a certain period of time.

The characteristics of the storage medium include the read performance, write performance, and type of the storage medium. There are various storage media. Different types of storage media have differences in terms of read performance, write performance, failure rate, and cost. The following gives some examples of different types of storage media:
(a) storage medium with high read performance, for example, storage medium based on the storage area network (SAN) and direct attached storage (DAS) of the redundant array of independent disks No.5 (RAID5) technology;
(b) storage medium with high write performance, for example, storage medium based on SAN and DAS of RAID0;
(c) storage medium with high read performance, low write performance, low failure rate, and high cost, for example, Flash magnetic disk; and
(d) storage medium with relatively low read and write performance, relatively high failure rate, and relatively low cost, for example, built-in magnetic disk of the server, and storage medium based on SAN and DAS of the serial advanced technology attachment (SATA) magnetic disk.

The preceding mapping relationship between the attributes of the content and the characteristics of the storage medium is mainly used to select a storage medium to meet the content storage requirement. In addition, it can be used to implement efficient storage and fully use the storage medium resources. For example, the mapping relationship may include any one or any combination of the following:
Mapping relationship 1: Mapping between hot content with a high popularity and a storage medium with high read and write performance. Specifically, the hot content with a high popularity adopts a storage medium based on SAN and DAS of RAID5. In this way, the requirement for a high user access frequency of the hot content may be satisfied.
Mapping relationship 2: Mapping between non-hot content with a low popularity and a storage medium with low read and write performance. Specifically, the non-hot content adopts the built-in magnetic disk of the server or a storage medium using the SAN and DAS modes of the SATA magnetic disk. Because the non-hot content features a low user access frequency but large capacity, the storage medium with low performance and low price may meet the storage requirement of the non-hot content.
Mapping relationship 3: Mapping between on-demand content and a storage medium with high requirements on read performance.
Mapping relationship 4: Mapping between relatively hottest content and a Flash magnetic disk.
Mapping relationship 5: Mapping between TVoD content and storage medium with high requirements on write performance. For example, the TVoD content adopts a storage medium based on SAN and DAS of RAID0. The storage medium may use a fiber channel (FC) with good performance and a serial attached SCSI (SAS) interface hard disk.

It should be noted that, in this embodiment, the mapping relationship between the attributes of the content and the characteristics of the storage medium includes but is not limited to the preceding mapping relationships, and may be selected properly according to the characteristics of the available storage media in the current CDN system.

In this embodiment, in the CDN system, multiple storage media with different characteristics may be mounted on one media server, or storage media with the same characteristics are mounted on one media server, but storage media with different characteristics are mounted on different media servers.

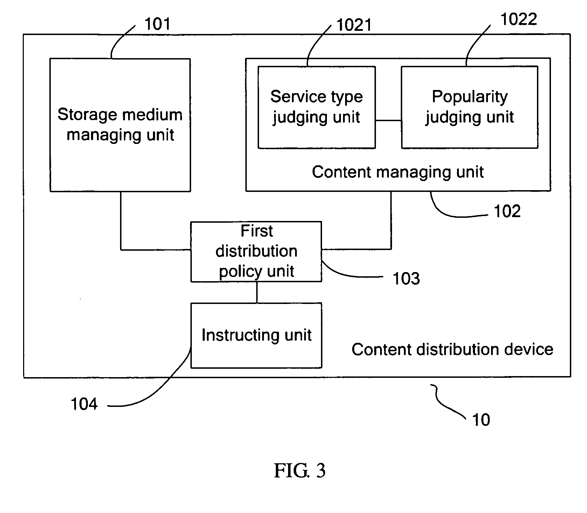

FIG 3 is a schematic diagram of a structure of the content distribution device shown in FIG 2. As shown in FIG. 3, the content distribution device 10 includes a storage medium managing unit 101, a content managing unit 102, a first distribution policy unit 103, and an instructing unit 104.

The storage medium managing unit 101 is configured to record information of the media server and the storage medium mounted on the media server and characteristics of the storage medium, so that the first distribution policy unit 103 determines the media server on which the storage medium is mounted.

Optionally, the storage medium managing unit 101 may receive characteristics of the storage medium mounted on the media server actively reported by the media server so as to know the media server in the system and the storage medium mounted on the media server as well as the characteristics of the storage medium in the system.

Optionally, the storage medium managing unit 101 may pre-configure all the media servers and the storage media mounted on the media servers in the CDN system. The mounted storage media may include storage media with different characteristics or different types of storage media or storage media with the same characteristics or the same type of storage media that have differences in read and write performance after undergoing different combinations or the RAID classification.

The content managing unit 102 is configured to: obtain the attributes of the content, and send the obtained attributes of the content to the first distribution policy unit 103. The content managing unit 102 may include a service type judging unit 1021 configured to judge the service type of the content. Optionally, the content managing unit 102 may also include a content popularity judging unit 1022 configured to judge the popularity of the content. In this embodiment, the popularity of the content may be measured or obtained.

The first distribution policy unit 103 is configured to: select a storage medium for the content according to the mapping relationship between the attributes of the content and the characteristics of the storage medium, and obtain a media server associated with the storage medium.

In this embodiment, the storage medium may be dynamically selected according to the mapping relationship between the attributes of the content and the characteristics of the storage medium in the current CDN system.

Optionally, the content may be pre-configured to regularly match a specific storage medium in the CDN system. In this embodiment, the first distribution policy unit 103 is further configured to store the mapping relationship between the attributes of the content and the storage medium.

For example, predefined attributes include attribute A (with high read performance requirement and high popularity) of hot content, attribute B (with high read performance requirement and low popularity) of non-hot content, attribute C (with high write performance requirement and high popularity) of hot content, and attribute D (with high write performance requirement and low popularity) of non-hot content; the characteristics of the storage medium include X (high read performance), Y (high write performance), and Z (SAN and DAS storage of the SATA magnetic disk). In this way, the mapping relationships such as A-X, C-Y, and B/D-Z may be pre-configured. Before distributing the content, the content managing unit 102 judges the attributes of the content, for example, B. Then, the first distribution policy unit 103 selects the storage medium Z according to the mapping relationship between the attributes of the content and the storage medium.

Optionally, the first distribution policy unit 103 is configured to determine, according to the mounting relationship between the media server and the storage medium, the media server associated with the storage medium.

The instructing unit 104 is configured to instruct the media server on which the storage medium is mounted to perform content distribution.

In this embodiment, after selecting a storage medium according to the attributes of the content, the content distribution device 10 instructs the media server 20 associated with the storage medium to obtain media content from a content source and to store the media content in the storage medium.

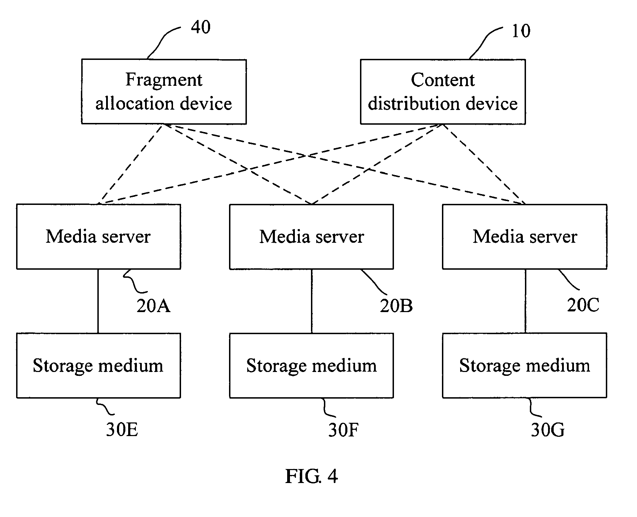

FIG 4 is a schematic diagram of a structure of a CDN system according to another embodiment of the present invention. As shown in FIG. 4, the CDN system in this embodiment includes a content distribution device 10 and at least one media server 20 (including a media server 20A, a media server 20B, and a media server 20C), storage media 30 (including a storage medium 30E, a storage medium 30F, and a storage medium 30G) with different characteristics mounted on the media server 20, and a fragment allocation device 40 configured to allocate content fragments when the content is stored as fragments.

In this embodiment, the content distribution device 10 is configured to select a storage medium for content according to the mapping relationship between the attributes of the content and the characteristics of the storage medium, and distribute the content fragments to the storage medium through the media server. The method for selecting, by the content distribution device 10, a storage medium for the content is the same as that in the first embodiment, and is not further described.

Optionally, when the user plays the content on demand, the fragment allocation device 40 instructs the media server 20 to provide services. At this time, the popularity information of different content may be recorded.

In this embodiment, after selecting a storage medium, the content distribution device 10 instructs the media server 20 associated with the storage medium to obtain media content fragments from a content source and to store the media content fragments in the storage medium. In addition, the content distribution device 10 sends the distribution information of content fragments to the fragment allocation device 40. To play the media stream, different media servers are required to send media streams (because the same content is fragmented and the fragments are stored on different media servers). Thus, the fragment allocation device 40 instructs, according to the distribution information of content fragments, different media servers 20 to send media streams.

In this embodiment, storage media with different characteristics are introduced in the CDN system to meet the storage medium requirements of different content or content fragments. When the content fragments are stored in the storage media, the load sharing between the media servers and between the storage media may be implemented, the storage utilization ratio of the storage media can be increased, and the cost of the CDN system is reduced.

In this embodiment, the content distribution device matches storage media with different characteristics with different content or content fragments. In this way, the storage utilization ratio can be increased, and the storage media can meet the storage environment requirement of the content, thus increasing the user satisfaction about various applications in the CDN system.

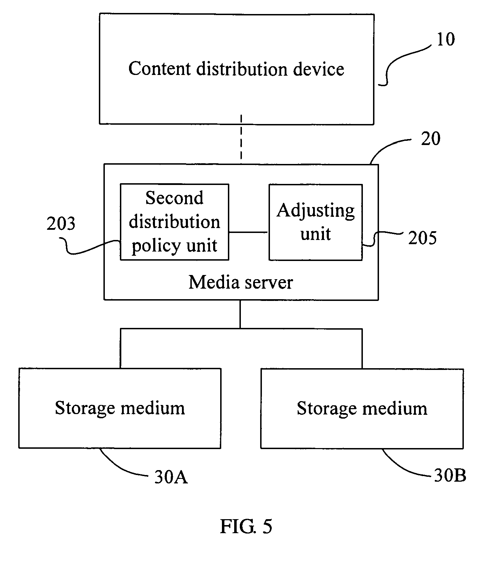

FIG. 5 is a schematic diagram of a structure of a CDN system according to another embodiment of the present invention. As shown in FIG. 5, the CDN system in this embodiment includes a content distribution device 10, at least one media server 20, and storage media (30A and 30B) with different characteristics mounted on the media server 20.

In this embodiment, the structure of the content distribution device 10 is the same as that of the content distribution device 10 in the first embodiment, and is not further described.

In this embodiment, the media server 20 includes a second distribution policy unit 203 and an adjusting unit 205.

The second distribution policy unit 203 is configured to select, according to the mapping relationship between the changed attributes of the content and the characteristics of the storage medium, another storage medium mounted on the media server for the content, when the attributes of the content are changed after the content is delivered to the storage medium 30A mounted on the media server. In this embodiment, another selected storage medium is the storage medium 30B.

The adjusting unit 205 is configured to move the content from the current storage medium 30A to the newly selected storage medium 30B.

Specifically, the storage media mounted on the media server may include different types of storage media, or storage media with different configurations, or storage media of the same type and with the same configuration.

In this embodiment, the content may be moved to a proper storage medium according to the change of the attributes of the content, thus further optimizing the performance of the CDN system.

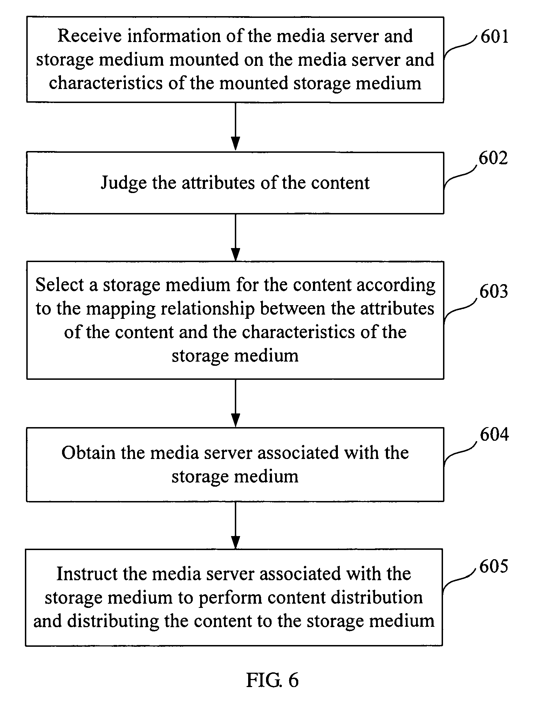

FIG. 6 is a schematic diagram of a flowchart of a content distribution method according to an embodiment of the present invention. As shown in FIG. 6, the content distribution method in this embodiment includes the following steps:

Step 601: Receive information of the media server and storage medium mounted on the media server and characteristics of the mounted storage medium.

In this embodiment, the information of the media server and storage medium mounted on the media server and characteristics of the mounted storage medium may be pre-configured. The characteristics of the storage medium include the storage type of the storage medium, or read and write performance of the same type of storage medium that undergoes different configurations or RAID classification. In addition, if the information of the media server and the storage medium mounted on the media server and characteristics of the mounted storage medium are already known, step 601 is optional.

Step 602: Judge the attributes of the content.

In this embodiment, the attributes of the content include the service type and popularity of the content. For example, when the attributes of the content are judged, it is determined that the service type of the content is on-demand content. Optionally, in this embodiment, the popularity of the content or the service type and popularity of the content may be judged. For example, if a lot of users play content on demand, the system may record the popularity of the content according to the number of on-demand times. Step 602 is optional. For example, if the attributes of the content are already known, this step is not needed.

Step 603: Select a storage medium for the content according to the mapping relationship between the attributes of the content and the characteristics of the storage medium.

In this embodiment, if the service type of the current content is on-demand content, a storage medium with high read performance is selected. If the service type of the current content is TVoD content, a storage medium with high write performance is selected. In this embodiment, the method for selecting a storage medium according to the attributes of the content is the same as the method for selecting a storage medium by the CDN system, and is not further described.

Step 604: Determine the media server associated with the storage medium. The media server associated with the storage medium may be determined according to the information of the media server and the storage medium mounted on the media server.

Step 605: Instruct the media server associated with the storage medium to perform content distribution and to distribute the content to the storage medium.

Optionally, in this embodiment, after the content is distributed to the storage medium through the media server on which the storage medium is mounted, the method further includes the following step if the attributes of the content stored in the storage medium are changed:

The media server selects, according to the mapping relationship between the changed attributes of the content and the characteristics of the storage medium, another storage medium mounted on the media server for the content, and moves the content from the current storage medium to the newly selected storage medium.

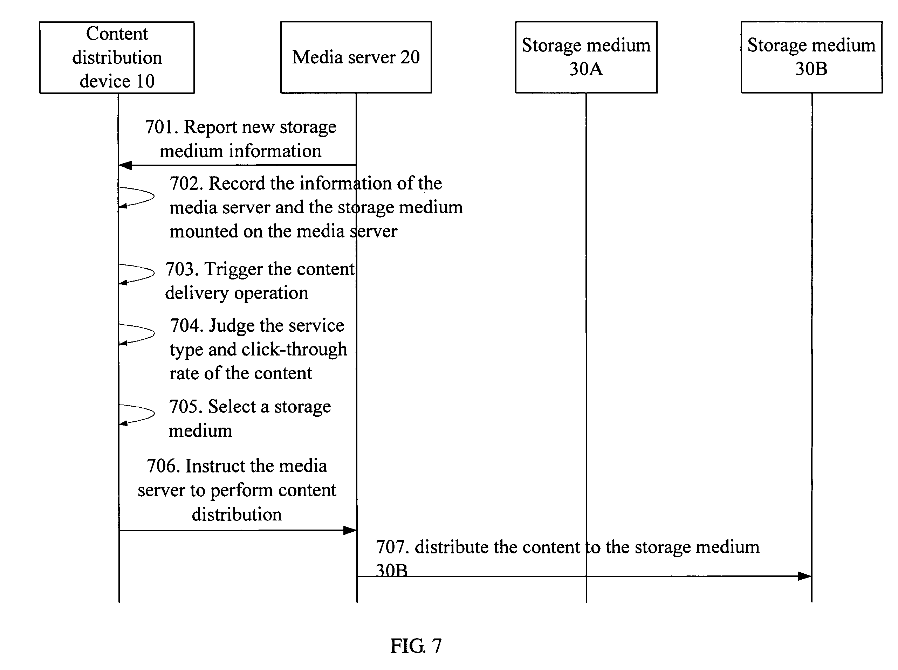

FIG 7 is an example of implementing content distribution according to an embodiment of the present invention. As shown in FIG. 7, the process includes the following steps:

Step 701: The media server 20 reports the information of the storage medium mounted on the media server 20 to the content distribution device 10.

In this embodiment, the characteristics of the storage medium include the read and write performance and type of the storage medium. In this embodiment, the storage medium 30B is a storage medium based on SAN and DAS of RAID5 and is with high read performance, and the storage medium 30A is a storage medium based on SAN and DAS of the SATA magnetic disk and is with high read performance.

Step 702: The content distribution device 10 records the information of the media server 20 and the storage medium mounted on the media server 20.

Step 703: The content distribution device 10 is triggered to distribute content.

Step 704: The content distribution device 10 judges the service type and popularity of the content.

Step 705: The content distribution device 10 selects a storage medium.

In this embodiment, because the content distribution device 10 already records the information of the storage media mounted on all the media servers 20 in the system, the content distribution device 10 may select a storage medium according to the mapping relationship between the service type and popularity of the content and the characteristics of the storage medium. In this embodiment, the scenario that the storage medium 30B is selected for the content is taken as an example.

Step 706: The content distribution device 10 instructs the media server 20 to perform content distribution.

After selecting the storage medium, the content distribution device 10 determines, according to the mounting relationship between the media server and the storage medium, the media server 20 on which the storage medium is mounted, and instructs the media server 20 to perform content distribution. The instruction should carry the information of the storage medium 30B.

Step 707: The media server 20 obtains the content according to the instruction, and stores the content in the storage medium 30B.

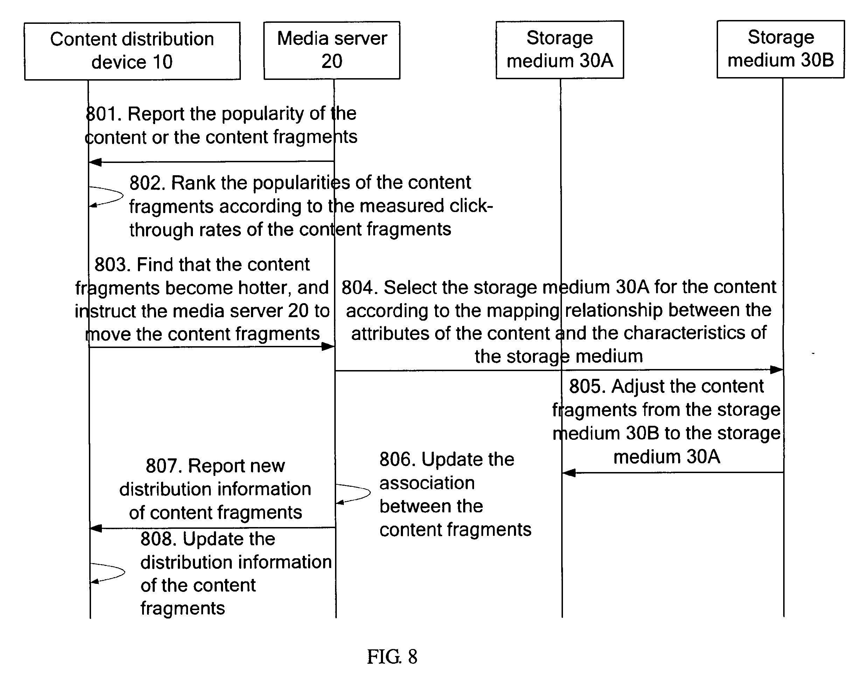

FIG. 8 is an example of dynamically moving content in different storage media on the same media server according to an embodiment of the present invention. The changes of the attributes of the content are usually the changes of the popularity of the content. When the attributes of the content are changed, the content distribution device needs to, according to the new attributes of the content, adjust the storage medium storing the content or content fragments, and move the content with a high popularity to the storage medium with high read performance. As shown in FIG 8, supposing the storage medium 30A is a storage medium based on SAN and DAS of RAID5 and is with high read performance and the storage medium 30B is a storage medium based on SAN and DAS of the SATA magnetic disk and is with low read performance, the CDN system performs an interaction process of adjusting the content. The process includes the following steps:

Step 801: The media server 20 reports the popularity of the content or the content fragments to the content distribution device 10.

Step 802: The content distribution device 10 ranks the popularity of the content fragments according to the measured popularity of the content fragments.

Step 803: The content distribution device 10 finds that the content fragments become hotter, and instructs the media server 20 to move the content fragments. Then, the process proceeds to step 804 to step 805.

Step 804: The media server 20 selects the storage medium 30A according to the mapping relationship between the attributes of the content and the characteristics of the storage medium.

Step 805: The media server 20 moves the content fragments from the storage medium 30B to the storage medium 30A.

Step 806: The media server 20 updates the association between the content fragments and the storage medium.

Step 807: The media server 20 reports the new distribution information of the content fragments to the content distribution device.

Step 808: The content distribution device 10 updates the recorded distribution information of the content fragments.

In this embodiment, because a lot of factors (such as read performance, write performance, cost or failure rate) regarding the characteristics of the storage medium need to be considered, different storage media may be selected according to different factors. The priority of the factors may be configured.

Because different fragments of the same content are distributed to different storage media, the media server needs to maintain the information of all the storage media mounted on the media server and the distribution details of the fragments of the same content in different storage media. These distribution details include storage directories of these content fragments in different storage media and the association between the content fragments. When the media server provides services, the playing of the content fragments needs to be switched according to the association between the content fragments. In the case of switching, the media server searches for the content fragments in the storage directories in different storage media.

Through the descriptions of the preceding embodiments, those skilled in the art may understand that the present invention may be implemented by software and a necessary universal hardware platform or by hardware only. Based on such understandings, the technical solution of the present invention or contributions to the prior art can be embodied by a software product. The software product is stored in a computer readable storage medium, for example, a read only memory/random access memory (ROM/RAM), a magnetic disk or a compact disk-read only memory (CD-ROM), and incorporates several instructions to instruct a computer device, for example, a PC, a server, or a network device, to execute the method provided by each embodiment of the present invention.

In embodiments of the present invention, storage media with different characteristics are introduced in the CDN system to meet the read and write requirements of different content or content fragments for the storage media. In this way, the storage utilization ratio can be increased, the performance of the CDN system can be optimized, and the cost of the CDN system can be reduced. For example, there are two types of storage media with different performance. The first type supports high-performance read, with the read rate of 800 Mbps and a poor write rate of 200 Mbps. The second type supports high-performance write, with the write rate of 800 Mbps and a poor read rate of 200 Mbps. If there is a batch of content and it is known that this batch of content requires high read performance (with the read rate of 600 Mbps and the write rate of 50 Mbps) according to the attribute, the storage utilization ratio of the storage medium will be increased obviously if this batch of content is delivered to the first type of storage medium. However, if this batch of content is delivered to the second type of storage medium, at least three storage media need to be configured, and the storage utilization ratio is low. Thus, with the technical solution of the present invention, the storage utilization ratio of the storage medium can be increased, and the cost of the CDN system is reduced.

It should be noted that the above descriptions are merely exemplary embodiments of the present invention, and those skilled in the art may make various improvements and refinements without departing from the principle of the invention. All such modifications and refinements are intended to be covered by the present invention.

## Claims

1. A content distribution method, comprising:
selecting a storage medium for content according to a mapping relationship between attributes of the content and characteristics of the storage medium; and
distributing the content to the selected storage medium through a media server on which the selected storage medium is mounted.

2. The method according to claim 1, wherein the attributes of the content comprise a service type and/or a popularity of the content, and the characteristics of the storage medium comprise one or any combination of the following: read performance, write performance, and storage type of the storage medium.

3. The method according to claim 2, wherein the mapping relationship between the attributes of the content and the characteristics of the storage medium comprises any one or any combination of the following:
mapping between on-demand content and a storage medium with high read performance;
mapping between TV on demand (TVoD) content and a storage medium with high write performance;
mapping between hot content and a storage medium with high read performance and write performance;
mapping between non-hot content and a storage medium with low read performance and write performance; and
mapping between relatively hottest content and a Flash magnetic disk.

4. The method according to claim 1, wherein before selecting the storage medium for the content according to the mapping relationship between the attributes of the content and the characteristics of the storage medium, the method further comprises:
receiving information of the media server and the storage medium mounted on the media server and characteristics of the mounted storage medium reported by the media server; or pre-configuring information of the media server and the storage medium mounted on the media server and characteristics of the mounted storage medium.

5. The method according to claim 1, wherein the step of distributing the content to the selected storage medium through the media server on which the selected storage medium is mounted comprises:
determining, according to the information of the media server and the mounted storage medium, the media server on which the selected storage medium is mounted; and
instructing the media server to perform content distribution, so that the media server distributes the content to the selected storage medium.

6. The method according to any one of claims 1-5, wherein if the attributes of the content stored in the storage medium are changed after the content is distributed to the selected storage medium through the media server on which the selected storage medium is mounted, the method further comprises:
by the media server, selecting, according to a mapping relationship between the changed attributes of the content and the characteristics of the storage medium, another storage medium mounted on the media server for the content; and
moving the content from the current storage medium to the newly selected storage medium.

7. A content distribution network (CDN) system, comprising a content distribution device and at least one media server, wherein:
storage media with different characteristics are mounted on the at least one media server, or storage media with different characteristics are mounted on the media servers; and
the content distribution device is configured to: select a storage medium for content according to a mapping relationship between the attributes of the content and the characteristics of the storage medium, and distribute the content to the selected storage medium through the media server on which the selected storage medium is mounted.

8. The system according to claim 7, wherein the media server is configured to perform the following operations when the attributes of the content are changed and after the content is distributed to the selected storage medium:
select, according to a mapping relationship between the changed attributes of the content and the characteristics of the storage medium, another storage medium mounted on the media server for the content; and
move the content from the current storage medium to the newly selected storage medium.

9. A content distribution device, comprising:
a first distribution policy unit, configured to: according to a mapping relationship between attributes of the content and characteristics of the storage medium, select a storage medium for content, and determine a media server on which the selected storage medium is mounted; and
an instructing unit, configured to instruct the media server on which the selected storage medium is mounted to perform content distribution.

10. The content distribution device according to claim 9, further comprising:
a storage medium managing unit, configured to record information of the media server and the storage medium mounted on the media server and characteristics of the storage medium, so that the first distribution policy unit determines the media server on which the storage medium is mounted.

11. The content distribution device according to claim 9, further comprising:
a content managing unit, configured to: obtain the attributes of the content, and send the obtained attributes of the content to the first distribution policy unit.

12. A media server, comprising:
a second distribution policy unit, configured to select, according to a mapping relationship between changed attributes of the content and characteristics of the storage medium, another storage medium mounted on the media server for content, when the attributes of the content in the storage medium mounted on the media server are changed; and
an adjusting unit, configured to move the content from a current storage medium to the newly selected storage medium.
